**Europäisches Patentamt**

**European Patent Office**

**Office européen des brevets**

(19)

(11) **EP 1 128 618 A2**

(12) **EUROPEAN PATENT APPLICATION**

(43) Date of publication:
**29.08.2001 Bulletin 2001/35**

(51) Int Cl.[7]: **H04L 25/02**

(21) Application number: **00304646.3**

(22) Date of filing: **31.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.02.2000 EP 00301555**

(71) Applicant: **LUCENT TECHNOLOGIES INC.**
**Murray Hill, New Jersey 07974-0636 (US)**

(72) Inventors:
• **Gerstacker, Wolfgang Helmut**
  **90482 Nürnberg (DE)**
• **Meyer, Raimund**
  **90449 Nürnberg (DE)**
• **Obernosterer, Frank Gerhard**
  **91367 Weissenhohe (DE)**

(74) Representative:
**Watts, Christopher Malcolm Kelway, Dr. et al**
**Lucent Technologies (UK) Ltd,**
**5 Mornington Road**
**Woodford Green Essex, IG8 0TU (GB)**

(54) **Method for tracking a time-variant channel impulse response**

(57) The invention concerns a method for adaptively tracking a time-variant channel pulse response in a receiver of a digital transmission system.

The object of the invention is to improve adaptive equalization based on a common LMS channel estimating algorithm of a data signal transmitted over a time-variant channel.

For this purpose channel estimated values ($\hat{h}_{ML,i}$ $\hat{h}_{COR,i}$, $\hat{h}_{pp,i}$) are obtained from a received distorted data signal for the pulse response of a transmission channel. Subsequently the pulse response of the transmission channel is adaptively tracked by weighting each obtained channel estimated value ($h_{ML,i}$ $h_{COR,i}$, $h_{pp,i}$) with an individual step rate. The adaptively tracked channel estimated values are applied to an equalizer (40) or a detection device.

## FIG.1

EP 1 128 618 A2

**Description**

The invention relates to a method for adaptively tracking a time-variant channel pulse response in a receiver of a digital transmission system.

During digital transmission via dispersive channels, for example via a mobile radio channel or via two-wire lines, the transmitted signal is distorted and disturbed by noise. In the case of GSM, for example, the distortions are produced by multi-path propagation and characteristic pulse interference of the applied modulation method. A receiver must therefore be able to carry out special correction or detection algorithms for recovering the transmitted data from the received signal. The optimum method for correcting dispersive channels is Maximum Likelihood Sequence Estimation (MLSE) which can be carried out by means of the Viterbi algorithm. However, in the case of long channel pulse responses and/or non-binary signal alphabets, the Viterbi algorithm can no longer be implemented in practice because of the then very high outlay. Thus, suboptimum methods must be used for reduced state sequence estimation, for example Reduced-State Sequence Estimation (RSSE) or Decision-Feedback Sequence Estimation (DFSE). It is also conceivable to use Decision-Feedback Equalization (DFE) or linear equalisation, which is of lower efficiency than sequence estimation methods but also entail less system complexity.

All mentioned equalisation methods have filter coefficients as free parameters, which are to be optimized depending on the present transmission scenario. Direct setting of these free parameters using an adaptive, recursive method, for example the Least-Mean Square (LMS) algorithm, which is described, for example, by S. Haykin in the article "Adaptive Filter Theory", Prentice -Hall, Upper Saddle River, New Jersey, third edition, 1996, is not possible in the case of a block-based transmission with relatively short blocks such as a mobile radio standard GSM. The reason for this is that such methods require a too long convergence time. Instead of this, in such scenarios estimation of the channel pulse response is undertaken with the aid of training sequences contained in the blocks, wherein the pulse response may be assumed to be approximately constant within the training sequence. It is functional, in a channel having a time-variant channel pulse response, as frequently used in mobile communications, to carry out a tracking of the estimated channel pulse response during each training sequence. In this case an LMS (Least-Mean-Square) based algorithm is used, which is only described as far as the invention is concerned.

Firstly we observe a distorting channel causing intersymbol interferences (ISI), transmitting e.g. a pulse amplitude modulated (PAM) signal via this channel. The signal r(k) received and sampled by a receiver results from a convolution of the time-discrete channel pulse response impaired by noise and is defined by the following equation:

$$r[k] = \sum_{i=0}^{L-1} h_i[k] a[k-i] + n[k] \, , \tag{1}$$

$n[k]$ representing the time-discrete interference, which is assumed to be white and of Gaussian distribution (the latter being given before sampling in the case of the use of a whitened matched filter or a general root Nyquist filter as time-continuous receiver input filter), $a[k]$ the time-discrete PAM transmitter signal, and $h_i[k]$ the time discrete channel pulse response of length $L$, $i$ representing the coefficient index of the time discrete channel pulse response. Depending on the modulation method used, the amplitude coefficients of the PAM transmitting signals and the channel pulse response are either purely real or complex.

For the purpose of channel pulse response estimation, firstly, for example in the first N time slots of a data block a training sequence known by the receiver is transmitted. Use is frequently made, in current mobile radio systems, of correlative channel estimation, which is mentioned in DE 196 14 543, or of the Maximum-Likelihood (ML)-channel estimation related thereto as a channel estimation method providing an estimated pulse response $h_i$, $i \in \{0,1, ...L - 1\}$. By reason of the channel pulse response varying with time, especially at high velocities (Doppler-Spread), the initially detected channel estimations often can not be used for equalizing the received signal in the whole data block. Therefore, during processing a data block, initially estimated channel pulse response coefficients for equalizing the received signals must be tracked continuously.

Using for instance a trellis-based Maximum Likelihood estimation method, an estimated value $\hat{a}[k - r_v]$ for the amplitude coefficient $a[k - r_v]$ following in $r_v$ time steps is given at a current time $k$, which can be used for updating the channel estimated values. Herein, $r_v$ characterises the audit length of the Viterbi algorithm usually used for channel estimation, been chosen depending on the Trellis diagram status number of the equalizer used (see e.g. publication "Trelliscodierung in der digitalen Übertragungstechnik-Grundlagen und Anwendungen" by J. Huber, published by Springer, Berlin, 1992). Current estimated channel pulse coefficients can be summarized as a vector

EP 1 128 618 A2

$$\hat{h}[k] = [\hat{h}_0[k], \hat{h}_1[k]...\hat{h}_{L-1}[k]]^T \tag{2}$$

with $.^T$ characterizing the transposition of a vector. Taking vector $\hat{h}[k]$, the estimated values $\hat{a}[k - r_v]$, $\hat{a}[k - r_v - 1]$,..., $\hat{a}[k - r_v - (L - 1)]$ at time $k$ and the received signal $r[k - r_v]$, an error signal at time $k$ can be calculated as following:

$$e[k] = r[k - r_v] - \sum_{i=0}^{L-1} \hat{h}_i[k]\hat{a}[k - r_v - i] \tag{3}$$

corresponding to the divergence of the actual received signal from a received signal modelled by means of estimated data and estimated channel. This error signal can be used, for instance, in the LMS algorithm for adaptive tracking (cf. e.g. F.R.: Magee and J.G. Proakis, "Adaptive Maximum-Likelihood Sequence Estimation for Digital Signaling in the Presence of Intersymbol Interference", IEEE Transactions on Theory, IT-19:120-124, Januar 1973). The recursive equation for tracking the estimated channel pulse response is:

$$\hat{h}[k + 1] = \hat{h}[k] + \mu e[k]\hat{a}^*[k] \tag{4}$$

with

$$\hat{a}_k = [\hat{a}[k - r_v]\hat{a}[k - r_v - 1]...\hat{a}[k - r_v - (L - 1)]]^T \tag{5}$$

In the equation $\mu$ denotes a step rate effecting the estimated coefficients convergence speed and accuracy of the channel pulse response.

Although the estimated coefficients of the channel pulse response, also called estimated channel values, are tracked, particularly at high Doppler Spread or long data blocks a decrease of the channel estimation reliability and as a result a deterioration of the received signal equalization is ascertained. It shows that channel estimation quality decreases with the distance to the training sequence within a data block, since then decision errors ($\hat{a}[k] \neq a[k]$) increasingly impair the channel pulse response estimation. Another reason for degradation of the channel pulse response estimation towards the edges of the data blocks lies in the step rate $\mu$ not being optimally adjusted, which is identical for all estimated coefficients of the channel pulse response. Choosing a high step rate provides better results in fast changing channels, while in a relative time-invariant channel and with low signal-to-noise ratio a step rate as low as possible would be optimal as a basis.

It is therefore the object of the invention to provide a method with which the efficiency of an adaptive equalization of a data signal transmitted via an distorted time-variant channel can be improved.

The core idea of the invention is to attain an improved tracking of a time-variant channel pulse response compared with state of the art, by individually calculating tracking speed for each estimated channel pulse response coefficient.

The above-mentioned technical problem is solved by the invention with the aid of the method steps of Claim 1.

Therefore, firstly L channel estimated values ($h_{pp,i}$, $h_{ML,i}$, $h_{COR,i}$) are obtained from a received corrupted data signal for the pulse response of a transmission channel. These can be channel estimation methods known in the art, which are based on correlative or Maximum-Likelihood estimations.

Thereafter transmission channel pulse response is tracked by weighting each obtained channel estimated value ($h_{pp,i}$, $h_{ML,i}$, $h_{COR,i}$) with an individual step rate. Then, adaptive tracked channel estimated values are fed to an equalizer or a detection device for equalizing the received corrupted signal.

Advantageous embodiments are the subject-matter of the depending claims.

For calculating the individual step rate, firstly the noise variance ($\sigma^2_n$) in the receiver is estimated. Different step rates for the channel estimated values are obtained by weighting a predefined step rate with factors ($d_i$), which are in a continuous functional relationship to the obtained , channel estimated values ($h_{pp,i}$, $h_{ML,i}$, $h_{COR,i}$) depending on noise variance ($\sigma^2_n$).

Continuous functional relationship is defined by the equation $\hat{d}_i = f(\hat{h}_i; \hat{\sigma}_n^2)$, $d_i$ is the weighting factor for ith step rate for tracking the ith channel estimated value, $h_i$ being the ith channel estimated value and $\sigma_n^2$ being the noise variance.

The continuous functional relationship is determined for example by the equation

$$\hat{d}_i = \max\left(\frac{\left|\hat{h}_{ML,i}\right|^r - C_1\hat{\sigma}_n^2/(N-L+1)}{\left|\hat{h}_{ML,i}\right|^r}, C_2\right) \qquad (6)$$

with $\hat{d}_i$ being the weighting factor for the ith step rate for tracking the ith channel estimated value, $\hat{h}_{ML,i}$ is the ith Maximum Likelihood channel estimated value, $\sigma_n^2$ is the noise variance, $N$ is the training sequence length, $L$ is the time-discrete pulse response length, $C_2$ is a selectable threshold value in the range of 0 to 1.

Advantageously r is in the range of 0 to 2 and $C_1$ is in the range of 0,5 to 1,5.

An even more improved tracking of the channel pulse response can be achieved, if at least some weighting factors ($d_i$) are in a different continuous functional relationship with the corresponding obtained channel estimated values ($h_{pp,i}$, $h_{ML,i}$, $h_{COR,i}$).

If the channel estimated values are complex, then different weighting factors ($\hat{d}_i$) can be used for the real part and imaginary part of a channel estimated value ($h_{pp,i}$, $h_{ML,i}$, $h_{COR,i}$).

Functionally a LMS (Least Mean Square) algorithm is used for adaptive tracking.

The adaptive equalization described above can provide even better results, if before the time-variant channel pulse response tracking, the obtained channel estimated values ($h_{pp,i}$, $h_{ML,i}$, $h_{COR,i}$) are weighted with factors ($d_i$), which are in a continuous functional relationship to the obtained channel estimated values ($h_{pp,i}$, $h_{ML,i}$, $h_{COR,i}$) depending on noise variance $\sigma_n^2$ estimated in the receiver. This method is subject to EP 0030155 5

Continuous functional relationship is defined here again by $d_i = f(h_i; \sigma_n^2)$, with $d_i$ being the weighting factor for the ith channel estimated value, $h_i$ being the ith channel estimated value and $\sigma_n^2$ being the noise variance.

In a special embodiment the continuous functional relationship is determined by the equation

$$\hat{d}_i = \max\left(\frac{\left|\hat{h}_{ML,i}\right|^r - C_1\hat{\sigma}_n^2/(N-L+1)}{\left|\hat{h}_{ML,i}\right|^r}, C_2\right) \qquad (7)$$

with $\hat{d}_i$ being the weighting factor for the ith channel estimated value, $\hat{h}_{ML,i}$ being the ith Maximum Likelihood channel estimated value, $\sigma_n^2$ being the noise variance, $N$ being the training sequence length, L being the time-discrete pulse response length, $C_2$ being a selectable threshold value in the range of 0 to 1, r being in the range of 0 to 2 and $C_1$ being in the range of 0,5 to 1,5.

The invention is explained in more detail below with the aid of an exemplary embodiment in conjunction with the attached drawings, wherein:

Fig.1    shows a block diagram of a digital transmission route with an inventory receiver,
Fig.2    a "soft" characteristic for a postprocessing device and a postprocessing device in accordance with the invention.

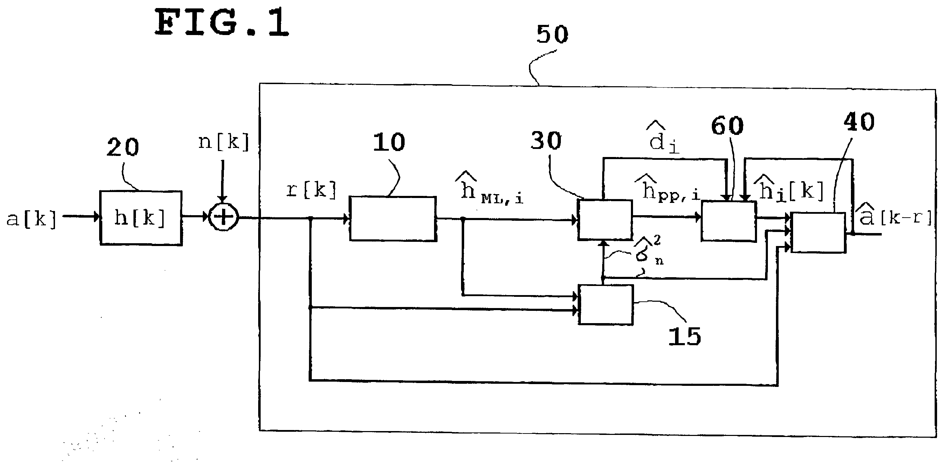

Fig. 1 shows a digital transmission path with a transmission channel 20 disturbed by noise $n[k]$, having a time-discrete pulse response $h[k]$ and a receiver 50 at whose input received symbols $r[k]$ arrive. The input of the receiver 50 serves, for instance, as input of a ML channel estimating device 10, at whose output the estimated value $h_{ML,i}$ is present which is then fed to the input of a postprocessing device 30. The input of the receiver 50 and the output of the channel estimating device 10 are connected to the inputs of a noise variance estimating device 15, which supplies an estimated noise variance $\sigma_n^2$ at the output. The output signal $h_{pp,i}$ of the postprocessing device 30 is fed to a coefficient tracking device 60, that individually calculates the channel pulse response, to be adapted, from these input signals, i. e. with different step rates, as is described in more detail below. The input of the receiver 50 and the outputs of the coefficient tracking device 60 are connected to an correction or detection device 40. Here it is pointed out, that the channel estimated values present at the output of the ML channel estimating device 10 can also be directly applied to the postprocessing device 30 of the coefficient tracking device 60, i.e. without postprocessing.

The mode of operation of the receiver 50 and, in particular, the mode of operation of the coefficient tracking device 60 are described in more detail below.

The ML channel estimated values present at the output of the ML channel estimating device 10 are postprocessed in the postprocessing device 30, which has a hard, or preferably a soft characteristic. The postprocessed channel estimated values are then fed into the coefficient tracking device 60.

After the ML channel estimation in the ML channel estimating device 10, for instance, an estimated value $\hat{\sigma}_n^2$ for noise variance is determined by a simulation of the undisturbed received signal in the noise variance estimating device 15, from which an estimated value for error variance of the ML channel estimation $\hat{\sigma}_n/(N-L+1)$ is determined directly. Afterwards in the postprocessing device 30 estimated values $d_i$ are calculated for the weighting factors $d_i$ appearing for instance at MMSE for ML channel estimated values. The estimated values $d_i$ are also applied to the input of the coefficient tracking device 60.

A general approach is to calculate the weighting factors for example as a function of the ML channel estimated values, leading to the general representation

$$\hat{d}_i = f(\hat{h}_{ML,i}; \hat{\sigma}_n^2) \tag{8}$$

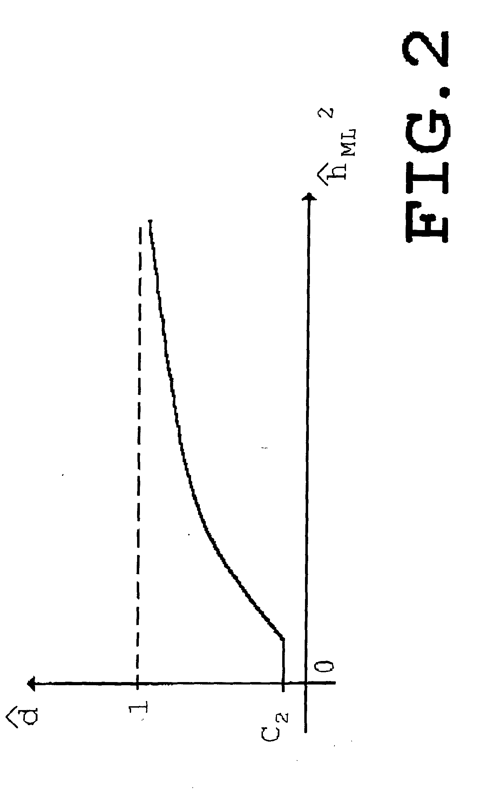

with function $f$ depending both on $\hat{\sigma}_n^2$ and on the individual coefficients $\hat{h}_{ML,i}$, and having a "soft" characteristic, as shown in Fig. 2. In general, there is a soft transition from $C_2$ to 1. Limiting cases of $C_2 = 0$ and/or $f(\hat{h}_{ML,i}; \sigma_n^2) = 1$ are permitted in principle; even negative functional values are not excluded.

A soft characteristic of the weighting factors results, for instance, from the equation:

$$\hat{d}_i = \frac{|\hat{h}_{ML,i}|^r - C_1 \hat{\sigma}_n^2 /(N - L + 1)}{|\hat{h}_{ML,i}|^r} \tag{9}$$

The factor $r$ in equation (9) is a number in the range from, for example, 0 to 2 preferably in the range from 1.4 to 2, and $C_1$ is a number in the range from, for example, 0.5 to 1.5. Subsequently, the postprocessing device 30 outputs as a result of postprocessing the ML channel estimated values the value of

$$\hat{h}_{pp,i} = \hat{d}_i \cdot \hat{h}_{ML,i} \tag{10}$$

However, it is also possible when using equation (9) to encounter negative weighting factors, and this appears to be unfavourable since said factors are generally positive in the case of the MMSE solution. In order to avoid negative weighting factors, it is proposed to set the weighting factors to a freely selectable threshold value $C_2$ when the value of equation (9) is less than $C_2$, $C_2$ being a number in the range from 0 to 1. This leads to the expression:

$$\hat{d}_i = \max\left( \frac{\left| \hat{h}_{ML,i} \right|^r - C_1 \hat{\sigma}_n^2 /(N - L + 1)}{\left| \hat{h}_{ML,i} \right|^r}, C_2 \right) \tag{11}$$

With the given selection of the weighting factors and in the case of amplitude coefficients with a Gaussian distribution and Gaussian interference it is possible to achieve substantially smaller squared errors over a wide range of the signal-to-noise ratio $\sigma_i^2 / \sigma_n^2$ than in the case of the ML channel estimation without weighting.

The method implemented in the postprocessing device 30 can be applied not only to ML channel estimations, but also to general correlative channel estimation, in which the estimated values

$$\hat{h}_{COR,i} = h_i + \tilde{n}_i \tag{12}$$

result, whereby it is possible to calculate the variances of the interferences $\tilde{n}_i$, denoted by $\sigma_{\tilde{n},i}^2$, directly in the case of a given training sequence and noise variance $\sigma_n^2$. The previous results for ML channel estimation can therefore also be applied here; for this purpose, it is necessary in each case to replace $\sigma_n^2 /(N - L + 1)$ by $\sigma_{\tilde{n},i}^2$.

Channel estimated values postprocessed in the postprocessing device 30 are applied to the coefficient tracking device 60, although, as mentioned, the channel estimated values can be directly applied to coefficient tracking device 60 without postprocessing. In the coefficient tracking device 60, for each channel estimated value a separate, this means individual, step rate $d_i$ is then calculated to attain an improved tracking of the estimated channel pulse response according to the equation

$$\hat{h}[k+1] = \hat{h}[k] + \mu De[k]\hat{a}^*[k]. \tag{13}$$

In equation (13) $\hat{h}[k]$ denotes a vector comprising the current estimated coefficients of the channel pulse response, $\hat{a}[k]$ denotes the estimated values present at time $k$, $\mu$ denotes a constant step rate , $e[k]$ denotes the error signal according to equation (3), and D denotes the matrix

$$D = \begin{bmatrix} \hat{d}_0 & 0 & 0 & \cdots & 0 \\ 0 & \hat{d}_1 & 0 & \cdots & 0 \\ \vdots & \vdots & \ddots & \vdots & \vdots \\ 0 & 0 & \vdots & \ddots & 0 \\ 0 & 0 & \cdots & 0 & \hat{d}_{L-1} \end{bmatrix}$$

containing in the main diagonal the individual weighting factors $\hat{d}_i$ for individually calculating the step rates for each channel estimated value. The weighting factors can be calculated as a function of the postprocessed ML channel estimated values and the estimated noise variance according to the equations (8) and (9), whereby the function has the soft characteristic shown in Fig. 2.

As an initial approach for recursion according to equation (13) preferably modified initial channel estimation according to equation (10) is used.

By modifying equation (13) in comparison to equation (4), small initial channel estimated values are assigned smaller step rates than high channel estimated values. Using a characteristic according to Fig. 2 a step rate equal to zero can be achieved. Hereby ruggedness concerning as optimum a step rate adaption as possible for different vehicle speeds and SNR or C/I ranges respectively, is clearly increased. Further, it turned out that channel estimation quality with progression of the channel estimating algorithm starting from the training sequence towards the block end is clearly more favourable than using a conventional LMS algorithm, that only uses a constant step rate $\mu$ for all channel estimated values.

**Claims**

1. Method for adaptively tracking a time-variant channel pulse response in a receiver of a digital transmission system, comprising the following steps:

   a) obtaining channel estimated values ($\hat{h}_{ML,i}$, $\hat{h}_{COR,i}$, $\hat{h}_{pp,i}$) for the pulse response of a transmission channel from a received corrupted data signal;
   b) adaptively tracking the pulse response of the transmission channel by weighting each obtained channel estimated value ($h_{ML,i}$, $h_{COR,i}$, $h_{pp,i}$) with an individual step rate; and
   c) feeding adaptively tracked channel estimated values in an equalizer or in a detection device.

2. Method according to Claim 1, **characterized in that** noise variance ($\hat{\sigma}^2_n$) is estimated in the receiver, and in that the different step rates are obtained by weighting a predetermined step rate with the aid of factors ($d_i$), which have a continuous functional relationship with the obtained channel estimated values ($h_{ML,i}$, $h_{COR,i}$, $h_{pp,i}$) wherein the continuous functional relationship depends on the noise variance ($\hat{\sigma}_n^2$).

3. Method according to Claim 2, **characterized in that** the continuous functional relationship is defined by the rule $d_i = f(h_i; \sigma_n^2)$, $d_i$ being the weighting factor for the ith step rate for tracking the ith channel estimated value, $h_i$ being the ith channel estimated value, and $\hat{\sigma}_n^2$ being the noise variance.

**4.** Method according to Claim 2 or 3, **characterized in that** the continuous functional relationship is determined by the equation

$$\hat{d}_i = \max\left(\frac{\left|\hat{h}_{ML,i}\right|^r - C_1\,\hat{\sigma}_n^2\,/(N-L+1)}{\left|\hat{h}_{ML,i}\right|^r}, C_2\right),$$

$\hat{d}_i$ being the weighting factor for the ith step rate for tracking the ith channel estimated value, $\hat{h}_{ML,i}$ being the ith maximum likelihood channel estimated value, $\hat{\sigma}_n^2$ being the noise variance, $N$ being the length of a training sequence, $L$ being the length of the time-discrete pulse response, and $C_2$ being a selectable threshold value which is in the range from 0 to 1.

**5.** Method according to Claim 4 **characterized in that** $r$ is in the range from 0 to 2 and $C_1$ is in the range from 0.5 to 1.5.

**6.** Method according to one of Claims 1 to 4, **characterized in that** at least some of the weighting factors $\hat{d}(i)$ have various continuous functional relationships with the corresponding obtained channel estimated values ($h_{ML,i}$, $h_{COR,i}$, $h_{pp,i}$).

**7.** Method according to one of Claims 1 to 5, **characterized in that** the channel estimated values are complex and different weighting factors ($d_i$) are used for the real and imaginary parts of a channel estimated value ($h_{ML,i}$, $h_{COR,i}$, $h_{pp,i}$).

**8.** Method according to one of Claims 1 to 7, **characterized in that** the channel estimated values ($\hat{h}_{ML,i}$, $\hat{h}_{COR,i}$) are obtained by means of a correlative or maximum likelihood estimation.

**9.** Method according to one of Claims 1 to 8, **characterized in that** a LMS (Least Mean Square) algorithm is used for adaptively tracking the pulse response.

**10.** Method according to one of Claims 1 to 9, **characterized in that** the noise variance ($\hat{\sigma}_n^2$) in the receiver is estimated and in that before step 1.b) is carried out the obtained channel estimated values ($h_{ML,i}$ $h_{COR,i}$, $h_{pp,i}$) are weighted with the aid of factors ($d_i$), which have a continuous functional relationship with the obtained channel estimated values ($h_{ML,i}$, $h_{COR,i}$, $h_{pp,i}$), wherein the continuous functional relationship depends on the noise variance ($\hat{\sigma}_n^2$).

**11.** Method according to Claim 10, **characterized in that**
a) the continuous functional relationship is defined by the rule $\hat{d}_i = f(\hat{h}_i; \hat{\sigma}_n^2)$, $\hat{d}_i$ being the weighting factor for the ith channel estimated value, $h_i$ being the ith channel estimated value, and $\sigma_n^2$ being the noise variance.

**12.** Method according to Claim 10 or 11, **characterized in that** the continuous functional relationship is determined by the rule

$$\hat{d}_i = \max\left(\frac{\left|\hat{h}_{ML,i}\right|^r - C_1\,\hat{\sigma}_n^2\,/(N-L+1)}{\left|\hat{h}_{ML,i}\right|^r}, C_2\right)$$

$\hat{d}_i$ being the weighting factor for the ith channel estimated value, $\hat{h}_{ML,i}$ being the ith maximum likelihood channel estimated value, $\hat{\sigma}_n^2$ being the noise variance, $N$ being the length of a training sequence, $L$ being the length of the time-discrete pulse response, and $C_2$ being a selectable threshold value which is in the range from 0 to 1.

**13.** Method according to Claim 12, **characterized in that** r is in the range from 0 to 2 and $C_1$ is in the range from 0.5 to 1.5.

# FIG.1

EP 1 128 618 A2

FIG. 2